(19) Europäisches Patentamt / European Patent Office / Office européen des brevets

(11) **EP 2 079 185 A1**

(12) **DEMANDE DE BREVET EUROPEEN**

(43) Date de publication:
**15.07.2009 Bulletin 2009/29**

(51) Int Cl.:
**H04L 5/00** $^{(2006.01)}$

(21) Numéro de dépôt: **09305002.9**

(22) Date de dépôt: **05.01.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**
Etats d'extension désignés:
**AL BA RS**

(30) Priorité: **11.01.2008 FR 0850146**

(71) Demandeur: **Alcatel Lucent**
**75008 Paris (FR)**

(72) Inventeurs:
• **Ben Rached, Nidham**
**78141, VELIZY (FR)**
• **Dorize, Christian**
**91620, NOZAY (FR)**
• **Krief, Patrick-Albert**
**78141, VELIZY (FR)**

(74) Mandataire: **Ameline, Jean-Paul B.C.**
**Alcatel-Lucent**
**Intellectual Property & Standards**
**54, rue La Boétie**
**75008 Paris (FR)**

(54) **Dispositif et procédé d'allocation dynamique et équitable de ressources d'un réseau radio de type OFDM**

(57)    Un procédé, dédié à l'allocation dynamique de ressources d'un réseau radio OFDM à des usagers (U), en présence d'une subdivision du plan temps/fréquence en N blocs (r) ayant chacun une même durée élémentaire et une même largeur spectrale, dans lequel on détermine :

- pour chaque durée élémentaire en cours et pour chaque usager (U), une valeur instantanée en cours d'un indicateur de qualité ($X_{U,r}(t)$), puis,

- pour chaque durée élémentaire en cours et pour chaque usager (U) ayant des données à transmettre, la valeur moyenne en cours de son indicateur de qualité ($<X_{U,r}>$) sur un intervalle de temps flottant, compte tenu de la valeur instantanée en cours de son indicateur de qualité ($X_{U,r}(t)$), puis la valeur en cours d'une déviation standard choisie ($\sigma_{X_{l,r}}$) des valeurs instantanées prises successivement par l'indìcateur de qualité ($X_{U,r}(t)$) de cet usager (U) sur l'intervalle de temps flottant par rapport à la valeur moyenne en cours de son indicateur de qualité ($<X_{U,r}>$), et

- pour chaque durée élémentaire en cours et pour chaque bloc (r) à allouer, un usager (U) en fonction d'une règle de sélection ($R(U_s,r_s)$) portant sur les valeurs instantanées en cours ($X_{U,r}(t)$), les valeurs moyennes en cours ($<X_{U,r}>$) et les valeurs en cours de la déviation standard ($\sigma_{X_{l,r}}$) déterminées pour chacun des usagers.

FIG.1

| | |
|---|---|
| 10 | Détermination $X_{U,r}(t)$ |
| 20 | Détermination $C_{U,r}(t)$ |
| 30 | Détermination $F(C_{U,r}(t), w_U)$ |
| 40 | Détermination $R(U_s,r_s)$ |
| 50 | Programmation des ressources |

**Description**

L'invention concerne les réseaux de communication radio de type OFDM («Orthogonal Frequency Division Multiplex»), et plus précisément l'allocation dynamique de ressources de tels réseaux à des usagers en présence d'une subdivision du plan temps/fréquence en un nombre N de blocs qui ont chacun une même durée élémentaire et une même largeur spectrale.

Tout type de réseau radio du type précité est concerné par l'invention, et notamment les réseaux terrestres OFDM qui implémentent une technologie issue d'une technologie satellite, ou les réseaux de téléphonie mobile (ou cellulaire) OFDM, tels que l'évolution de l'UMTS appelée LTE (« Long Term Evolution »)), ou encore les réseaux locaux sans fil (standards WLAN («Wireless Local Area Network » - IEEE 802.11a, Wi-Fi (802.11g), ETSI HiperLAN/2), et WiMAX (IEEE 802.16, ETSI HiperMAN)).

Par ailleurs, on entend ici par «terminal de communication» tout équipement de communication d'usager, mobile ou portable ou encore cellulaire, capable d'échanger des données (éventuellement des contenus multimédia) par voie d'ondes avec d'autres terminaux de communication ou des équipements de réseau, via un réseau radio de type OFDM implémentant une subdivision du plan temps/fréquence en N blocs (connus sous l'acronyme PRB (pour « Physical Resource Block ») dans le cas d'un réseau LTE). Par conséquent, il pourra par exemple s'agir d'un téléphone mobile (ou cellulaire), d'un ordinateur portable ou d'un assistant personnel numérique (ou PDA).

Comme le sait l'homme de l'art, dans les réseaux radio du type précité l'allocation de ressources entre différents usagers peut se faire selon la technique dite de « l'équité proportionnelle » (ou « proportional fair »). Dans sa version généralisèe, cette technique consiste à allouer à un usager un débit qui est inversement proportionnel à son coût en termes de consommation de ressources. On sélectionne alors l'usager qui offre le rapport $P = T^{\alpha}/R^{\beta}$ le plus grand, où T désigne le débit qui peut être potentiellement offert à l'usager avec les ressources disponibles, R désigne le débit moyen mesuré pour cet usager, et $\alpha$ et $\beta$ sont des paramètres de contrôle de l'équité.

Par exemple, si $\alpha$ vaut 0 et $\beta$ vaut 1, alors l'allocation se fait usager après usager (ou « Round-Robin »), ce qui est parfaitement équitable pour tous les usagers. Si $\alpha$ vaut 1 et $\beta$ vaut 0, alors l'allocation est dite à C/I maximum (ou « maximum C/I ») du fait qu'elle maximise le débit au sein d'une cellule. Cette seconde situation n'est pas équitable du fait qu'elle pénalise les usagers qui ne disposent pas de bonnes conditions de transmission. Si $\alpha$ vaut 1 et $\beta$ vaut 1, alors l'allocation est dite à équité proportionnelle, du fait qu'elle sert les usagers proportionnellement aux conditions de transmission qu'ils rencontrent.

L'invention a pour but de proposer une technique d'allocation alternative qui permet d'offrir une réelle équité entre usagers tout en exploitant de manière efficace les blocs (de ressources radio), par exemple de type PRB, contrairement à l'allocation Round-Robín qui induit un faible débit moyen par usager et à l'allocation à équité proportionnelle qui n'est pas parfaitement équitable pour tous les usagers.

Elle propose à cet effet un dispositif, dédié à l'allocation dynamique à des usagers de ressources d'un réseau de communication radio de type OFDM, en présence d'une subdivision d'un plan temps/fréquenceen N blocs ayant chacun une même durée élémentaire et une même largeur spectrale (ou fréquentíelle), et chargé de déterminer :

-   pour chaque durée élémentaire en cours et pour chaque usager qui a des données à transmettre, et à partir de valeurs instantanées en cours d'un indicateur de qualité ($X_{u,r}(t)$) determinées pour chacun des usagers, la valeur moyenne en cours de son indicateur de qualité ($<X_{U,r}>$) sur un intervalle de temps flottant, compte tenu de la valeur instantanée en cours de son indicateur de qualité ($X_{U,r}(t)$), puis la valeur en cours d'une déviation standard choisie $\left( \sigma_{X_{U,r}} \right)$ des valeurs instantanées prises successivement par de qualité ($X_{U,r}(t)$) de cet usager sur l'intervalle de temps flottant par rapport à la valeur moyenne en cours de son indicateur de qualité ($<X_{U,r}>$), et

-   pour chaque durée élémentaire en cours et pour chaque bloc (r) à allouer, un usager en fonction d'une règle de sélection ($R(U_s,r_s)$) portant sur les valeurs instantanées en cours ($X_{U,r}(t)$), les valeurs moyennes en cours ($<X_{U,r}>$) et les valeurs en cours de la déviation standard $\left( \sigma_{X_{U,r}} \right)$ déterminées pour chacun des usagers,

Le dispositif selon l'invention peut comporter d'autres caractéristiques qui peuvent être prises séparément ou en combinaison, et notamment :

-   la règle ($R(U_s,r_s)$) qui est utilisée pour sélectionner le bloc d'un usager pour la durée élémentaire t peut par exemple être donnée par la formule $R(U_s,r_s) = \underset{U,r}{Arg\,max} \left( C_{U,r}(t) \right),$ où $C_{U,r}(t)$ est donné par la formule

$$C_{U,r}(t) = \left( \frac{X_{U,r}(t) - <X_{U,r}>}{\sigma_{X_{U,r}}} \right) ;$$

- il peut être également chargé de prendre en compte des contraintes de qualité de service (QoS) associées aux usagers afin de déterminer les blocs qui doivent leur être alloués; ≻ il peut être chargé d'associer à chaque usager un poids ($w_U$) représentatif de sa probabilité d'être sélectionné ;

- il peut être chargé de recalculer pour chaque durée élémentaire chaque poids ($w_U$) qui est associé à chaque usager avant de procéder à l'allocation de chaque nouveau bloc;
- par exemple, la règle ($R(U_s,r_s)$) qui est utilisée pour sélectionner le bloc d'un usager pour la durée élémentaire t est donnée par la formule $R(U_s,r_s) = \underset{U,r}{Arg\,max} \left( -\frac{1}{w_U} Log(Q(C_{U,r}(t))) \right)$, où $C_{U,r}(t)$ est donné par la formule $C_{U,r}$ $C_{U,r}(t) = \left( \frac{X_{U,r}(t) - <X_{U,r}>}{\sigma_{X_{U,r}}} \right)$ et Q est la fonction dite de Marcum.

L'invention propose également un équipement, dédié à la programmation et de ressources d'un réseau de communication radio de type OFDM a des usagers, en présence d'une subdivision d'un plan temps/fréquence en N blocs ayant chacun une même durée élémentaire et une même largeur spectrale, et muni d'un dispositif d'allocation dynamique de ressources du type de celui présenté ci-avant et de moyens de programmation chargés de déterminer, pour chaque usager ayant fait l'objet d'une allocation de bloc par le dispositif (lors d'une durée élémentaire) un schéma de modulation et/ou une puissance de transmission qui optimise le débit du bloc alloué.

L'invention propose également un procédé dédié à l'allocation dynamique à des usagers de ressources d'un réseau de communication radio de type OFDM, en présence d'une subdivision d'un plan temps/fréquence en N blocs qui ont chacun une même durée élémentaire et une même largeur spectrale, et dans lequel on détermine :

- pour chaque durée élémentaire en cours et pour chaque usager, une valeur instantanée en cours d'un indicateur de qualité ($X_{U,r}(t)$), puis,
- pour chaque durée élémentaire en cours et pour chaque usager ayant des données à transmettre, la valeur moyenne en cours de son indicateur de qualité ($<X_{U,r}>$) sur un intervalle de temps flottant, compte tenu de la valeur instantanée en cours de son indicateur de qualité ($X_{U,r}(t)$), puis la valeur en cours d'une déviation standard choisie $\left( \sigma_{X_{U,r}} \right)$ des valeurs instantanées prises successivement par l'indicateur de qualité ($X_{U,r}(t)$) de cet usager sur l'intervalle de temps flottant par rapport à la valeur moyenne en cours de son indicateur de qualité ($<X_{U,r}>$), et
- pour chaque durée élémentaire en cours et pour chaque bloc (r) à allouer, un usager en fonction d'une règle de sélection ($R(U_s,r_s)$) portant sur les valeurs instantanées en cours ($X_{U,r}(t)$), les valeurs moyennes en cours ($<X_{U,r}>$) et les valeurs en cours de la déviation standard $\left( \sigma_{X_{U,r}} \right)$ déterminées pour chacun des usagers.

Le procédé selon l'invention peut comporter d'autres caractéristiques qui peuvent être prises séparément ou en combinaison, et notamment;

- la régle ($R(U_s,r_s)$) de sélection d'un bloc ($r_s$) pour un usager ($U_s$) pour la durée élémentaire I: peut par exemple être donnée par la formule $R(U_s,r_s) = \underset{U,r}{Arg\,max} (C_{U,r}(t)),$ où $C_{U,r}(t)$ est donné par la formule

$$C_{U,r}(t) = \left( \frac{X_{U,r}(t) - <X_{U,r}>}{\sigma_{X_{U,r}}} \right) ;$$

- on peut prendre également en compte des contraintes de qualité de service associées aux usagers lors de la détermination des blocs qui doivent leur être alloués ; ≻ on peut associer à chaque usager un poids ($w_U$) représentatif de sa probabilité d'être sélectionné ;

• on peut recalculer pour chaque durée élémentaire chaque poids ($w_U$) qui est associé à chaque usager avant de procéder à l'allocation de chaque nouveau bloc ;
• la règle ($R(U_s,r_s)$) de sélection d'un bloc pour un usager, pour la durée élémentaire t, peut par exemple être donnée par la formule $R(U_s,r_s) = Arg\max_{U,r} \left( -\frac{1}{w_U} Log\left(Q\left(C_{U,r}(t)\right)\right) \right)$, , où $G_{U,r}(t)$ est donné par la formule $C_{U,r}(t) = \left( \dfrac{X_{U,r}(t) - <X_{U,r}>}{\sigma_{X_{U,r}}} \right)$ et Q est la fonction dite de Marcum :

- après avoir alloué des blocs à des usagers lors d'une durée élémentaire, on peut déterminer pour chacun de ces usagers des schémas de modulation et/ou des puissances de transmission qui optimisent les débits des blocs qui leur ont été alloués.

L'invention est particulièrement bien adaptée, bien que de façon non exclusive, aux réseaux de communication mobile (ou cellulaires) de type LTE (« Long Term Evolution » - évolution de l'UMTS),

D'autres caractéristiques et avantages de l'invention apparaîtront à l'examen de la description détaillée ci-après, et des dessins annexés, sur lesquels :

- la figure 1 est un diagramme bloc illustrant les principales étapes d'un exemple de procédé selon l'invention d'allocation dynamique de ressources d'un réseau de communication radio de type OFDM, et
- la figure 2 est un diagramme illustrant les évolutions temporelles des valeurs instantanées des indicateurs de qualité de type SINR de trois usagers différents ayant trois valeurs moyennes de SINR différentes, et en compétition pour l'allocation d'un bloc (ou PRB),

Les dessins annexés pourront non seulement servir à compléter l'invention, mais aussi contribuer à sa définition, le cas échéant.

Dans ce qui suit, on considère à titre d'exemple non limitatif que le réseau de communication radio de type OFDM est un réseau de téléphonie mobile (ou cellulaire) de type LTE (évolution de l'UMTS), éventuellement à antennes multiples (ou MIMO). Mais, l'invention n'est pas limitée à ce type de réseau de communication radio. Elle concerne en effet tout réseau radio (mobile ou cellulaire ou encore sans fil) mettant en oeuvre une technique de multiplexage par répartition en fréquences orthogonales (OFDM) en présence d'une subdivision du plan temps/fréquence en N blocs (tels que des PRBs (Physical Resource Blocks)). Par conséquent, il pourra également s'agir d'un réseau terrestre OFDM implémentant une technologie issue d'une technologie satellite ou d'un réseau local sans fil (standards WLAN « Wireless Local Area Network » - IEEE 802,11a, Wi-Fi (802.11g), ETSI HiperLAN/2) et WIMAX (IEEE 802.16, ETSI HiperMAN)), par exemple.

Par ailleurs, on considère dans ce qui suit, à titre d'exemple non limitatif, que les terminaux de communication radio sont des téléphones mobiles (ou cellulaires). Mais, l'invention n'est pas limitée à ce type de terminal de communication radio. Elle concerne en effet tout équipement de communication mobile (ou portable ou encore cellulaire) capable d'échanger des données (éventuellement des contenus multimédia) par voie d'ondes avec d'autres terminaux de communication ou des équipements de réseau, via un réseau radio du type précité. Par conséquent, il pourra également s'agir d'un ordinateur portable ou d'un assistant personnel numérique (ou PDA), par exemple.

L'invention propose un procédé destiné à allouer dynamiquement des ressources d'un réseau radio (ici de type LTE) à des usagers U. Il est rappelé que le réseau met en oeuvre une subdivision du plan en un nombre entier N de blocs r(r = 1 à N) qui ont tous la même durée élémentaire (ou TTI (pour « Transmission Time Interval » - intervalle de temps de transmission)) T(n) et la même largeur spectrale. L'indice n sert ici à différencier dans le temps différents intervalles de temps (ou durées élémentaires ou encore TTI). Ainsi, T(n) et T(n+1) désignent deux intervalles de temps (ou durées élémentaires ou encore TTI) qui se suivent. Par exemple, N est égal à 12, TTI est égale à 1 ms et la largeur spectrale (ou fréquentielle) est égale à 15 kHz.

On notera que ce procédé peut être mis en oeuvre par un dispositif d'allocation dynamique de ressources D qui fait partie du réseau radio, et plus précisément du réseau d'accès radio de ce dernier. Un tel dispositif D peut éventuellement faire partie d'un équipement de réseau dédié à la programmation et l'allocation de ressources, par exemple au sein d'une station de base (ou eNB).

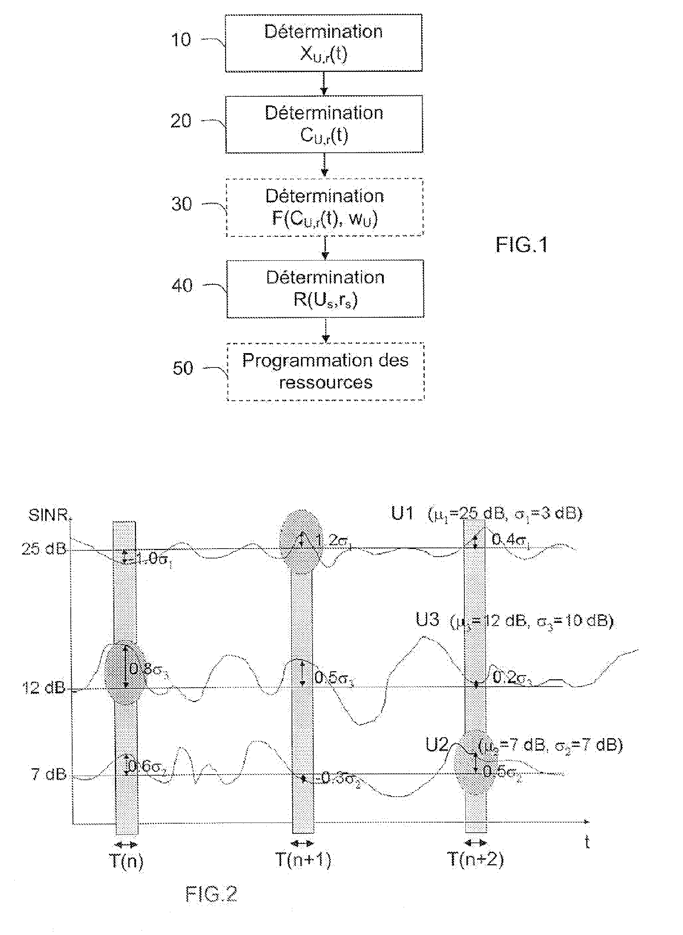

Comme cela est lustre sur la figure 1, le procédé selon invention comprend tout d'abord une étape 10 consistant à déterminer pour chaque durée élémentaire T(n) en cours (c'est-à-dire incluant l'instant t en cours) et pour chaque usager une valeur « instantanée » en cours (pour la durée élémentaire T(n) considérée) d'un indicateur de qualité (ou CQI (pour « Channel Quality Indicator »)) d'un type choisi $X_{U,r}(t)$.

Tout type d'indicateur (CQI) dont la valeur peut varier dans le temps et représentatif d'une qualité de service (QoS) peut être choisi. Par exemple, l'indicateur de qualité est le SINR (« Signal to Interference plus Noise Ratio » - rapport entre le niveau du signal reçu et le niveau du bruit additionné au niveau des interférences). Mais, l'indicateur pourrait être également le débit, par exemple.

Ces valeurs instantanées en cours $X_{U,r}(t)$ du SINR (par exemple) pour chacun des usagers U peuvent être déterminées à partir de l'analyse des bits des séquences de pilote (ou balises) qui sont distribuées sur tout le plan temps/fréquence.

Dans le sens de transmission descendant (ou « downlink »), l'organe récepteur (le terminal (ici mobile)) est chargé de mesurer la qualité de chaque bloc de ressource (fréquentiel) (r). Pour ce faire, il estime la puissance du signal à partir d'une observation du canal pilote partagè, et estime également le niveau d'interférences sur le bloc de ressource. Le rapport entre ces deux puissances fournit une mesure de qualité que le terminal mobile transmet à l'entité station de base (ou analogue) sur un canal de signalisation montant (ou « uplink »).

Dans le sens de transmission montant, grâce aux pilotes dédiés émis par les terminaux mobiles, la station de base mesure pour chaque terminal mobile connecté et chaque bloc de ressource fréquentiel une mesure de qualité qui peut, à titre d'exemple, prendre la forme d'un rapport signal à bruit (ou SNR).

Le procédé selon l'invention se poursuit par une étape 20 consistant tout d'abord à déterminer pour chaque durée élémentaire T(n) en cours et pour chaque usager U qui a des données à transmettre (par exemple stockées dans une mémoire tampon), la valeur moyenne en cours $<X_{U,r}>$ de l'indicateur de qualité de l'usager U considéré sur un intervalle de temps flottant (ou glissant) de durée D choisie et intégrant la durée èlémentaire T(n) en cours. On comprendra que chaque valeur moyenne en cours $<X_{U,r}>$ d'un usager U prend en compte la valeur instantanée en cours $X_{U,r}(t)$ qui a été déterminée lors de l'étape 10 pour cet usager U.

La valeur moyenne en cours $<X_{U,r}>$ d'un usager U peut par exemple être définie par la formule

$$<X_{U,r}> = \frac{1}{D} \int_{t-D}^{t} X_{U,r}(t)\,dt \; . \; .$$

L'étape 20 se poursuit par la détermination, toujours pour chaque durée élémentaire T(n) en cours et pour chaque usager U qui a des données à transmettre, de la valeur en cours d'une déviation standar $\sigma_{X_{U,r}}$ , d'un type choisie, des valeurs instantanées qui ont été successivement prises par l'indicateur de qualité $X_{U,r}(t)$ de l'usager considéré U sur l'intervalle de temps flottant, par rapport à la valeur moyenne en cours $<X_{U,r}>$ de cet indicateur de qualité pour l'usager considéré U.

Cette déviation standard $\sigma_{X_{U,r}}$ est par exemple définie par la formule

$$\sigma_{X_{U,r}} = \sqrt{\frac{1}{D} \int_{t-D}^{t} \left(X_{U,r}(t) - <X_{U,r}>\right)^2 dt} \; . \; .$$

L'intégration temporelle qui apparaît dans la dernière formule peut par exemple être effectuée au moyen d'un filtre récursif (ou IIR (filtre à réponse impulsionnelle infinie)) avec un facteur d'oubli approprié.

L'étape 20 se termine par la détermination des différentes valeurs prises par une fonction $C_{U,r}(t)$ dont les variables sont la valeur instantanée en cours $X_{U,r}(t)$, la valeur moyenne en cours $<X_{U,r}>$ et la valeur en cours dedéviation standard $\sigma_{X_{U,r}}$ qui ont toutes été déterminées pour chacun des usagers U. Plus précisément, on détermine une valeur de $C_{U,r}(t)$ pour chaque usager U.

Par exemple, la fonction $C_{U,r}(t)$ est définie par la formule $\quad C_{U,r}(t) = \left(\dfrac{X_{U,r}(t) - <X_{U,r}>}{\sigma_{X_{U,r}}}\right) \; . \; .$

Une fois que l'on est en possession de toutes les valeurs prises par la fonction $C_{U,r}(t)$ pour les différents usagers, on peut alors les utiliser pour déterminer (ou sélectionner) un usager U pour chaque bloc qui doit être alloué pour la durée élémentaire en cours T(n). Cette dernière détermination se fait lors d'une étape 40 en fonction d'une règle de sélection $R(U_s,r_s)$ (où $U_s$, désigne l'usager sélectionné et $r_s$ le bloc (ou PRB) sélectionné) qui porte sur les valeurs de la fonction $C_{U,r}(t)$, et donc sur les valeurs instantanées en cours $X_{U,r}(t)$ les valeurs moyennes en cours $<X_{U,r}>$ et les valeurs en cours de la déviation standard $\sigma_{X_{U,r}}$ qui ont été déterminées pour chacun des usagers U.

La règle de sélection $R(U_s,r_s)$ est appliquée de façon récursive pour chaque durée élémentaire T(n) et sous deux contrainte. La première contrainte porte sur le fait que chaque bloc (PRB) r ne peut être alolué qu'à un seul et unique usager U. La seconde contrainte porte sur le fait que le nombre d'usagers $U_s$ qui sont sélectionnés lors de chaque durée élémentaire T(n) ne peut pas excéder le nombre maximal d'usagers U qui peuvent faire l'objet d'une programmation de ressources pour la durée élémentaire T(n) considérée.

Plusieurs règles de sélection $R(U_s,r_s)$ peuvent être utilisées.

Ainsi, on peut utiliser la régle de sélection $R(U_s,r_s)$ qui est définie par la formule

$$R(U_s,r_s) = Arg \max_{U,r}\left(C_{U,r}(t)\right).$$ Il ressort de cette formule que la règle de sélection ne dépend pas de la puissance moyenne du signal sur le canal de transmission de l'usager. Par conséquent, si tous les usagers présentent les mêmes statistiques sur leurs canaux de transmission respectifs, mais des puissances moyennes de signal différentes, ils auront la même probabilité d'être programmés. Cela résulte de l'assertion triviale

$$\Pr obabilit\acute{e}(\max(X1,...,Xn)) = \frac{1}{n}$$ qui s'applique à une distribution de n variables aléatoires identiques.

Les usagers U ont donc quasiment la même règle de sélection, voire même certainement la même règle de sélection si les statistiques de leurs canaux de transmission sont du second type (comme par exemple lorsque la propagation est de type Rayleigh, ce qui est le cas de propagation radio le plus fréquent en OFOM).

Il en résulte que l'on choisit au cours du temps pour chaque usager U les ressources (blocs r) qui sont les plus favorables, c'est-à-dire celles qui offrent la valeur instantanée en cours $X_{u,r}(t)$ la plus grande comparée aux statistiques de l'indicateur de qualité ($<X_{u,r}>$ et $\sigma_{X_{U,r}}$) de l'usager U considéré, Chaque usager U est donc statistiquement servi avec les meilleures ressources (r) qu'il peut attendre compte tenu des conditions de transmission rencontrées par son canal de transmission. Il en résulte également que le débit d'un usager U varie peu autour d'une valeur moyenne, quand il y a un assez grand nombre d'usagers qui concourent simultanément pour les ressources fréquentielles d'une même station de base.

A titre d'exemple, on considère le cas où un premier usager U1, disposant d'une valeur moyenne $<X_{u1\cdot r}>$ de SINR égale à 30 dB et associée à une délation standard $\sigma_{X_{U,r}}$ également égale à 30 dB, et un second usager U2, disposant d'une valeur moyenne $<X_{u2,r}>$ de SINR égale à 10 dB et associée à une déviation standard $\sigma_{X_{U,r}}$ également ègale à 10 dB, sont en compétition à un instant t (correspondant à la durée élémentaire T(n)) pour obtenir une ressource (bloc r). Alors, si la valeur instantanée $X_{u1,r}(T(n))$ du SINR du premier usager U1 est égale à 33 dB, tandis que la valeur instantanée $X_{U2,r}(T(n))$ du SINR du second usager U2 est égale à 16 dB, la règle de sélection $R(U_s,r_s)$ mentionnée ci-avant prend, après conversion des valeurs logarithmiques en valeurs linéaires, la valeur 1 pour le premier usager U1 et la valeur 3 pour le second usager U2. C'est donc le second usager U2 qui est sélectionné pour t'allocation du bloc r considéré lors de la durée élémentaire T(n) en cours, alors même que la valeur instantanée de son SINR est la plus faible.

On a schématiquement représenté dans le diagramme de la figure 2 un autre exemple illustrant les évolutions temporelles (t) des valeurs instantanées des SINRs de trois usagers différents ayant trois valeurs moyennes de SINR différentes et en compétition pour l'allocation d'une même ressource (ou PRB) r lors de trois durées élémentaires (ou intervalles de temps ou TTI) T(n), T(n+1) et T(n+2) qui se suivent dans le temps.

Plus précisément, dans cet exemple non limitatif on considère que le premier usager U1 dispose d'une valeur moyenne µ1 (ou $<X_{U1,r}>$) de SINR égale à 25 dB (supposée sensiblement constante) associée à une déviation standard $\sigma_1$ (ou $\sigma_{X_{U,r}}$) égale à 3 dB (supposée sensiblement constante), le deuxième usager U2 dispose d'une valeur moyenne µ2 (ou $<X_{U2,r}>$) de SINR égale à 7 dB (supposée sensiblement constante) associée à une déviation standard $\sigma_2$ (ou $\sigma_{Xu,r}$) égale à 7 dB (supposée sensiblement constante), et le troisième usager U3 dispose d'une valeur moyenne µ3 (ou $<X_{U3,r}>$) de SINR égale à 12 dB (supposée sensiblement constante) associée à une déviation standard $\sigma_3$ (ou $\sigma_{Xu,r}$) égale à 10 dB (supposée sensiblement constante).

Lors de la durée élémentaire T(n), l'écart entre la valeur instantanée du SINR $X_{U1,r}(T(n))$ et la valeur moyenne $\mu1$ du premier usager U1 est égal à - $1\sigma_i$, l'écart entre la valeur instantanée du SINR $X_{U2,r}(T(n))$ et la valeur moyenne $\mu2$ du deuxième usager U2 est égal à +.$0,6\sigma_2$, et l'écart entre la valeur instantanée du SINR $X_{U3,r}(T(n))$ et la valeur moyenne $\mu3$ du troisième usager U3 est égal à+$0.8\sigma_2$, Par conséquent, si l'on applique la règle de sélection $R(U_s,r_s)$ mentionnée ci-avant, le bloc r considéré est attribué au troisième usager U3, puisque c'est lui qui dispose à cet instant de la valeur instantanée en cours $X_{U3,r}$t) la plus grande comparée aux statistiques de son SINR ($\mu3$ et $\sigma_3$).

Lors de la durée élémentaire T(n+1), l'écart entre la valeur instantanée du SINR $X_{U1,r}(T(n))$ et la valeur moyenne $\mu1$ du premier usager U1 est égal à +$1,2(\sigma_1$, l'écart entre la valeur instantanée du SINR XU2AT(n)) et la valeur moyenne $\mu2$ du deuxième usager U2 est égal à -$0,3\ \sigma_2$, et l'écart entre la valeur instantanée du SINR $X_{U3,r}(T(n))$ et la valeur moyenne $\mu3$ du troisième usager U3 est égal à +$0,5\ \sigma_3$, Par conséquent, si l'on applique la règle de sélection $R(U_s.r_s)$ mentionnée ci-avant, le bloc r considéré est attribué au premier usager U1, puisque c'est lui qui dispose à cet instant de la valeur instantanée en cours $X_{U1,r}$(t) la plus grande comparée aux statistiques de son SINR ($\mu1$ et $\sigma_1$)

Lors de la durée élémentaire T(n+2), l'écart entre la valeur instantanée du SINR $X_{U1,r}(T(n))$ et la valeur moyenne $\mu1$ du premier usager U1 est égal à +$0,4\ \sigma_1$, l'écart entre la valeur instantanée du SINR $X_{U2,r}(T(n))$ et la valeur moyenne $\mu2$ du deuxième usager U2 est égal à +$0,5\ \sigma_2$, et l'écart entre la valeur instantanée du SINR $X_{U3,r}(T(n))$ et la valeur moyenne $\mu3$ du troisième usager U3 est égal à +$0,2\ \sigma_3$. Par conséquent, si l'on applique la règle de sélection $R(U_s,r_s)$ mentionnée ci-avant, le bloc r considéré est attribué au deuxième usager U2, puisque c'est lui qui dispose à cet instant de la valeur instantanée en cours $X_{U2,r}$(t) la plus grande comparée aux statistiques de son SINR ($\mu2$ et $\sigma_2$).

On peut également utiliser une règle de sélection $R(U_s,r_s)$ qui prend en compte des contraintes de qualité de service qui sont associées aux usagers U afin de déterminer les blocs r qui doivent leur être avouées. Cela permet en effet de favoriser certains usagers compte tenu de la qualité de service (QoS) à laquelle ils ont droit du fait de l'abonnement contracté auprès de leur opérateur. Il est rappelé que la OoS concerne généralement le niveau de priorité de transmission de l'usager (par exempte « Platinium », «Gold» ou « Silver ») et/ou le type de trafic (par exemple voie sur IP, navigation sur l'Internet, transfert de fichiers de données et analogues) pour le(s)quel(s) la QoS s'exprime sous la forme de contraintes sur les débits ou les délais,

Pour ce faire, on peut utiliser n'importe quelle fonction relative à la OoS, Généralement cette fonction dépend essentiellement des contraintes minimum et maximum sur les délais et/ou sur les débits moyens.

Si l'on considère que la valeur instantanée $X_{U,r}(t)$ de l'indicateur de qualité choisi suit une loi de distribution approximativement gaussienne, en particulier lorsqu'il s'agit du débit, alors, la valeur de la fonction $C_{U,r}(t)$ suit une loi de distribution normale standard (c'est-à-dire suit une loi de distribution gaussienne avec une valeur moyenne nulle et une variance unitaire).

Si l'on veut tenir compte de la QoS, et plus précisément des contraintes de débit, et/ou de délai de transmission qui sont associées à chaque usager U, il est nécessaire d'associer à chaque usager U un poids $W_U$ qui est représentatif de sa probabilité d'être sélectionné,

On notera que chaque poids $w_U$ peut être éventuellement variable dans le temps. Plus précisément, le dispositif D peut éventuellement recalculer pour chaque durée élémentaire T(n) chaque poids $W_U$ qui est associé à chaque usager U avant de procéder à l'allocation de chaque nouveau bloc r. Cela permet notamment d'augmenter le poids associé à un usager U lorsque le délai de transmission auquel a droit cet usager U est sur le point d'expirer (en particulier lorsqu'une application à contrainte temporelle est concemée). Dans ce cas, après chaque allocation de ressources (r) pour la durée élémentaire en cours T(n), tous les poids sont mis à jour et normalisés (par le dispositif D) afin d'avoir constamment

$$\sum_{U} w_U = 1.$$

Grâce à ces poids $W_U$, on obtient pour chacun des N usagers U une allocation de ressource égale à une fraction $w_U$ du débit total disponible, alors que ce dernier est équitablement partagé entre les N usagers selon une proportion de 1/N en l'absence de prise en compte de la QoS.

La probabilitè $P(U_s)$ de sélectionner un usager U, qui est égale au poids $w_U$ associé à cet usager U, peut s'écrire:

$$P(U_S = U) = P(\text{Arg max}(F(C_{U,r}(t), w_U)) = U) = w_U.$$

La valeur de la fonction $C_{U,r}(t)$ suivant une loi de distribution gaussienne, la fonction $F(C_{U,r}(t), w_U))$ peut alors par exemple s'écrire sous la forme $F(C_{U,r}(t), w_U) = -\frac{1}{w_U} Log\left(Q\left(C_{U,r}(t)\right)\right)$, où Q est la fonction dite de Marcum donnée par la formule $Q(x) = \frac{1}{\sqrt{2\pi}} \int_{-\infty}^{x} e^{\frac{-t^2}{2}} dt$. Cela revient à transformer la distribution gaussienne de $C_{U,r}(t)$ en une distribution exponentielle de moyenne égale à 1.

La règle $R(U_s, r_s)$ de sélection d'un bloc $r_s$ pour un usager $U_s$ pour une durée élémentaire $T(n) = t$ peut alors être donnée par la formule suivante:

$$R(U_s, r_s) = Arg\max_{U,r}\left(F(C_{U,r}(t), w_U)\right) = Arg\max_{U,r}\left(-\frac{1}{w_U} Log\left(Q\left(C_{U,r}(t)\right)\right)\right).$$

Avec ce type de règle de sélection, l'usager U est donc non seulement statistiquement servi avec les meilleures ressources (r) qu'il peut attendre compte tenu des conditions de transmission rencontrées par son canal de transmission, mais également compte tenu de certaines au moins des contraintes de la QoS à laquelle il a droit.

Les valeurs de la fonction $F(C_{U,r}(t), w_U)$ sont par exemple calculées dans une étape optionnelle 30 (voir figure 1) qui précède l'étape 40 d'application de la règle de sélection $R(U_s, r_s)$ mentionnée ci-dessus, Ce calcul peut par exemple se faire à l'aide d'une table dans laquelle sont tabulés dey valeurs logarithmiques de la fonction Q.

Les poids $w_U(t)$ variables dans le temps vont dépendre du niveau de satisfaction de la QoS pour l'usager U considéré.

A titre d'exemple si la QoS concerne une contrainte sur le débit, alors on pourra exprimer $w_U(t)$ comme indiqué ci-dessous.

Soient $R_{MIN}$ et $R_{MAX}$ les limites autorisées pour l'utilisateur U en termes de débit, et soit R(t) le débit moyen réalisé pour l'usager U, et si l'on définit une variable D(t) comme suit :

- D(t) = $(R_{MIM} - R(t))/R_{MIN}$ si R(t) < $R_{MIN}$,
- D(t) = $(R_{MAX} - R(t))/R_{MAX}$ Si R(t) > $R_{MAX}$, et
- D(t) = 0 si si $R_{MIN}$ < R(t) < $R_{MAX}$, alors à l'instant t+1 la mise à jour de $w_U(t)$ ne dépend que de sa valeur prise à l'instant précédent t selon la formule $w_U(t+1) = w_U(t) + D(t)$, avec une initialisation à t = 0 donnée par $w_U(t) = 1/N$, où N désigne le nombre total d'usagers.

Quelle que soit la règle de sélection $R(U_s, r_s)$ utilisée, une fois que les blocs r ont été alloués à des usagers U lors de l'étape 40 pour la durée élémentaire T(n), on peut procéder dans une étape 50 à la détermination, pour chacun de ces usagers U, du schéma de modulation et/ou de la puissance de transmission qui optimise(nt) le débit du bloc r qui vient de lui être alloué.

Cette étape 50 peut être mise en oeuvre par un module de programmation MP d'un équipement de programmation et d'allocation de ressources qui, comme indiqué précédemment, contient éventuellement un dispositif d'allocation dynamique de ressources D,

On notera que dans le cas d'une transmission descendante (downlink), le terminal mobile peut calculer lui-même la valeur moyenne $<X_{U,r}>$ et l'écart type (ou déviation standard) $\sigma_{Xu,r}$, puis il remonte ces deux informations ($<X_{U,r}>$ et $\sigma_{Xu,r}$) en supplément des informations de qualité de chaque ressource fréquentielle par le biais du canal de signalisation montant.

Le dispositif d'allocation dynamique de ressources D selon l'invention peut être réalisé sous la forme de circuits électroniques, de modules logiciels (ou informatiques), ou d'une combinaison de circuits et de logiciels.

La technique d'allocation selon l'invention est particulièrement avantageuse car elle permet qu'une majorité d'usagers disposent d'un débit moyen plus élevé que celui permis offert par une technique d'allocation classique à équité proportionnelle (ou propotional fair), aussi bien en présence d'une densité de trafic intermédiaire qu'en présence d'une densité de trafic élevée,

L'invention ne se limite pas aux modes de réalisation de dispositif et de procédé d'allocation dynamique de ressources et d'équipement de programmation et d'allocation de ressources décrits ci-avant, seulement à titre d'exemple, mais elle englobe toutes les variantes que pourra envisager l'homme de l'art dans le cadre des revendications ci-après,

**Revendications**

1. Dispositif d'allocation dynamique à des usagers (U) de ressources d'un réseau de communication radio de type OFDM, en présence d'une subdivision d'un plan temps/fréquence en N blocs (r) ayant chacun une même durée élémentaire (T) et une même largeur spectrale, agencé pour déterminer, pour chaque durée élémentaire en cours et pour chaque usager (U) ayant des données à transmettre, et à partir de valeurs instantanées en cours d'un indicateur de qualité $(X_{U,r}(t))$ déterminées pour chacun desdits usagers (U), la valeur moyenne en cours de cet indicateur de qualité $(<X_{U,r}>)$ sur un intervalle de temps flottant intégrant la, durée élémentaire en cours, compte tenu de la valeur instantanée en cours dudit indicateur de qualité $(X_{U,r}(t))$ déterminée pour ledit usager (U), puis la valeur en cours d'une déviation standard choisie $(\sigma_{Xu,r})$ des valeurs instantanées prises successivement par ledit indicateur de qualité $(X_{U,r}(t))$ dudit usager (U) sur ledit intervalle de temps flottant par rapport à la valeur moyenne en cours dudit indicateur de qualité $(<X_{U,r}>)$ dudit usager (U), et pour déterminer un usager (U) pour chaque durée élémentaire en cours et pour chaque bloc (r) à allouer, en fonction d'une règle de sélection $(R(U_s,r_s))$ portant sur lesdites valeurs instantanées en cours $(X_{U,r}(t))$, les valeurs moyennes en cours $(<X_{U,r}>)$ et les valeurs en cours de la déviation standard$(\sigma_{Xu,r})$ déterminées pour chacun desdits usagers.

2. Dispositif selon la revendication 1, dans lequel ladite,règle $(R(U_s,r_s))$ de sélection d'un bloc $(r_s)$ pour un usager $(U_s)$ pour la durée élémentaire t est donnée par la formule $R(U_s,r_s)=Arg\max(C_{U,r}(t))$, où $C_{U,r}(t)$ est donné par la formule

$$C_{U,r}(t)=\left(\frac{X_{U,r}(t)-<X_{U,r}>}{\sigma_{X_{U,r}}}\right).$$

3. Dispositif selon l'une des revendications 1 et 2, également agencé pour prendre en compte des contraintes de qualité de service associées auxdits usagers (U) pour déterminer les blocs (r) à allouer à ces usagers (U).

4. Dispositif selon la revendication 1, agencé pour associer à chaque usager (U) un poids $(w_U)$ reprèsentatif de sa probabilité d'être sélectionné,

5. Dispositif selon la revendication 4, agencé pour recalculer pour chaque durée élémentaire (T) chaque poids $(w_U)$ associé à chaque usager (U) avant de procéder à l'allocation de chaque nouveau bloc (r).

6. Dispositif selon l'une des revendications 4 et 5, dans lequel ladite règle $(R(U_s,r_s))$ de sélection d'un bloc $(r_s)$ pour un usager $(U_s)$ pour la durée élémentaire t est donnée pare la formule

$$R(U_s,r_s)=Arg\max_{U,r}\left(-\frac{1}{w_U}Log\left(Q\left(C_{U,r}(t)\right)\right)\right),$$

où $C_{U,r}(t)$ est donné par la formule $C_{U,r}(t)=\left(\frac{X_{U,r}(t)-<X_{U,r}>}{\sigma_{X_{U,r}}}\right)$ est Q est la fonction dite de Marcum.

7. Equipement de programmation et d'allocation de ressources d'un réseau de communication radio de type OFDM à des usagers (U), en présence d'une subdivision d'un plan temps/fréquence en N blocs (r) ayant chacun une même durée élémentaire (T) et une même largeur spectrale, comprenant un dispositif d'allocation dynamique de ressources (D) selon l'une des revendications précédentes et des moyens de programmation (MP) agencés pour déterminer, pour chaque usager ayant fait l'objet d'une allocation de bloc (r) par ledit dispositif (D), lors d'une durée élémentaire (T), un schéma de modulation et/ou une puissance de transmission qui optimise le débit dudit bloc (r) alloué.

8. Procédé d'allocation dynamique à des usagers (U) de ressources d'un réseau de communication radio de type OFDM, en présence d'une subdivision d'un plan temps/fréquence en N blocs (r) ayant chacun une même durée élémentaire (T) et une même largeur spectrale, comprenant les étapes suivantes:

- déterminer, pour chaque durée élémentaire (T) en cours et pour chaque usager (U), une valeur instantanée en cours d'un indicateur de qualité ($X_{U,r}(t)$), puis,
- déterminer, pour chaque durée élémentaire en cours (T) et pour chaque usager (U) ayant des données à transmettre, la valeur moyenne en cours de cet indicateur de qualité ($<X_{U,r}>$) sur un intervalle de temps flottant intégrant la durée élémentaire en cours, compte tenu de la valeur instantanée en cours dudit indicateur de qualité ($X_{U,r}(t)$) déterminée pour ledit usager (U), puis la valeur en cours d'une déviation standard choisie ($\sigma_{Xu,r}$) des valeurs instantanées prises successivement par l'indicateur de qualité ($Xu_r(t)$) dudit usager (U) sur ledit intervalle de temps flottant par rapport à la valeur moyenne en cours dudit indicateur de qualité ($<X_{u,r}>$) dudit usager (U), et
- déterminer, pour chaque durée élémentaire en cours et pour chaque bloc (r) à allouer, un usager (U) en fonction d'une règle de sélection ($R(U_s,r_s)$) portant sur lesdites valeurs instantanées en cours ($X_{U,r}(t)$), les valeurs moyennes en cours ($<X_{U,r}>$) et les valeurs en cours de la déviation standard ($\sigma_{Xu,r}$) dèterminées pour chacun desdits usagers.

9. Procédé selon la revendication 8, dans lequel ladite règle ($R(U_s,r_s)$) de sélection d'un bloc ($r_s$) pour un usager (Us) pour la durée élémentaire t est donnée par la formule $R(U_s,r_s)=Arg\ max(C_{U,r}(t))$, où $C_{U,r}(t)$ est donné parla formule

$$C_{U,r}(t) = \left( \frac{X_{U,r}(t) - <X_{U,r}>}{\sigma_{X_{U,r}}} \right).$$

10. Procédé selon l'une des revendications 8 et 9, dans lequel on prend également en compte des contraintes de qualité de service associées auxdits usagers (U) lors de la détermination des blocs (r) à allouer à ces usagers (U).

11. Procédé selon la revendication 10, dans lequel on associe à chaque usager (U) un poids ($w_U$) représentatif de sa probabilité d'être sélectionné.

12. Procédé selon la revendication 11, dans lequel on recalcule pour chaque durée élémentaire (T) chaque poids ($w_U$) associé à chaque usager (U) avant de procéder à l'allocation de chaque nouveau bloc (r).

13. Procédé selon l'une des revendications 11 et 12, dans lequel ladite règle ($R(U_s,r_s)$) de sélection d'un bloc ($r_s$) pour un usager ($U_s$) pour la durée élémentaire t est donnée par la formule

$$R(U_s, r_s) = Arg\ \max_{U,r} \left( -\frac{1}{w_U} Log(Q(C_{U,r}(t))) \right),$$

où $C_{U,r}(t)$ est donné par la formule $C_{U,r}(t) = \left( \frac{X_{U,r}(t) - <X_{U,r}>}{\sigma_{X_{U,r}}} \right)$ et Q est la fonction dite de Marcum.

14. Procédé selon l'une des revendications 8 à 13, dans lequel après avoir alloué des bloc (r) à des usagers (U) lors d'une durée élémentaire (T), on détermine pour chacun de ces usagers (U) des schémas de modulation et/ou des puissances de transmission qui optimisent les débits des blocs (r) qui leur ont été alloués.

FIG.1

FIG.2

Europäisches
Patentamt

European
Patent Office

Office européen
des brevets

**RAPPORT DE RECHERCHE EUROPEENNE**

Numéro de la demande

EP 09 30 5002

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 708 531 A (SAMSUNG ELECTRONICS CO LTD [KR]; UNIV YONSEI SEOUL [KR]) 4 octobre 2006 (2006-10-04) * alinéa [0004] * * alinéa [0016] - alinéa [0021] * * alinéa [0025] - alinéa [0031] * * revendications 7-9 * * figure 3 * ----- | 1-14 | INV. H04L5/00 |
| A | SORRENTINO S ET AL: "A Predictive Opportunistic Scheduler for 4G Wireless Systems" MOBILE AND WIRELESS COMMUNICATIONS SUMMIT., 1 juillet 2007 (2007-07-01), pages 1-5, XP031132480 IEEE, Piscataway, NJ, USA ISBN: 978-1-4244-1662-2 * abrégé * * page 2, colonne 1 * * page 3, colonne 1 * * page 4, colonne 1 * ----- | 1-3, 6-10,13, 14 | |
| A | US 2007/202904 A1 (CHENG JUN [JP] ET AL) 30 août 2007 (2007-08-30) * alinéa [0001] * * alinéa [0004] - alinéa [0005] * * alinéa [0014] * * alinéa [0037] - alinéa [0038] * ----- -/-- | 1,3,7,8, 10,14 | DOMAINES TECHNIQUES RECHERCHES (IPC) H04L |

Le présent rapport a été établi pour toutes les revendications

| Lieu de la recherche | Date d'achèvement de la recherche | Examinateur |
|---|---|---|
| La Haye | 13 mars 2009 | Moreno, Marta |

EPO FORM 1503 03.82 (P04C02)

**EP 2 079 185 A1**

Europäisches Patentamt
European Patent Office
Office européen des brevets

# RAPPORT DE RECHERCHE EUROPEENNE

Numéro de la demande

EP 09 30 5002

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | JIANWEI WANG ET AL: "Performance Evaluation for QoS Oriented Cross Layer Optimization in OFDMA Networks" WIRELESS COMMUNICATIONS, NETWORKING AND MOBILE COMPUTING, 1 septembre 2007 (2007-09-01), pages 184-187, XP031139728 IEEE, PISCATAWAY, NJ, USA ISBN: 978-1-4244-1311-9 III. Adaptively weighted utility function ----- | 1,3-5,8, 10-12 | |
| A | ZHONG-HAI HAN ET AL: "Opportunistic scheduling with partial channel information in OFDMA/FDD systems" VEHICULAR TECHNOLOGY CONFERENCE, 2004, vol. 1, 26 septembre 2004 (2004-09-26), - 29 septembre 2004 (2004-09-29) pages 511-514, XP010788428 IEEE, PISCATAWAY, NJ, USA ISBN: 978-0-7803-8521-4 * page 511, colonne 2, alinéa 3 - page 512, colonne 1 * ----- | 1,2,7-9, 14 | |
| A | TIANKUI ZHANG ET AL: "Utility Fair Resource Allocation Based on Game Theory in OFDM Systems" COMPUTER COMMUNICATIONS AND NETWORKS, 1 août 2007 (2007-08-01), pages 414-418, XP031136899 IEEE, Piscataway, NJ, USA ISBN: 978-1-4244-1250-1 I. Introduction III. Suboptimal solution for NBS ----- | 1,8 | |
| A | EP 1 575 234 A (SAMSUNG ELECTRONICS CO LTD [KR]) 14 septembre 2005 (2005-09-14) * alinéa [0016] * * alinéa [0039] * * alinéa [0075] * ----- | 1,8 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 13 mars 2009 | Moreno, Marta |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................................................
& : membre de la même famille, document correspondant

EPO FORM 1503 03.82 (P04C02)

13

**ANNEXE AU RAPPORT DE RECHERCHE EUROPEENNE
RELATIF A LA DEMANDE DE BREVET EUROPEEN NO.**

EP 09 30 5002

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-03-2009

| Document brevet cité au rapport de recherche | | Date de publication | Membre(s) de la famille de brevet(s) | | Date de publication |
|---|---|---|---|---|---|
| EP 1708531 | A | 04-10-2006 | CN<br>KR<br>US | 1878021 A<br>20060104240 A<br>2006268814 A1 | 13-12-2006<br>09-10-2006<br>30-11-2006 |
| US 2007202904 | A1 | 30-08-2007 | CN<br>WO | 1926907 A<br>2005089006 A1 | 07-03-2007<br>22-09-2005 |
| EP 1575234 | A | 14-09-2005 | AU<br>BR<br>CA<br>CN<br>JP<br>WO<br>KR<br>US | 2005222290 A1<br>PI0508692 A<br>2557040 A1<br>1930801 A<br>2007526692 T<br>2005088870 A1<br>20050091573 A<br>2005201295 A1 | 22-09-2005<br>11-09-2007<br>22-09-2005<br>14-03-2007<br>13-09-2007<br>22-09-2005<br>15-09-2005<br>15-09-2005 |

EPO FORM P0460

Pour tout renseignement concernant cette annexe : voir Journal Officiel de l'Office européen des brevets, No.12/82